(19) Europäisches Patentamt / European Patent Office / Office européen des brevets

(11) **EP 3 067 870 B1**

(12) **EUROPEAN PATENT SPECIFICATION**

(45) Date of publication and mention
of the grant of the patent:
**01.11.2017 Bulletin 2017/44**

(51) Int Cl.:
*G08B 13/191* (2006.01)    *G08B 29/18* (2006.01)

(21) Application number: **16157448.8**

(22) Date of filing: **25.02.2016**

(54) **SUPPRESSION OF POPCORN NOISE IN PASSIVE INFRARED DETECTOR**

POPCORN - RAUSCHUNTERDRÜCKUNG IN PASSIVEN INFRAROTDETEKTOREN

SUPPRESSION DE BRUIT POPCORN D'UN CAPTEUR PASSIV INFRAROUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 EP 15158673**

(43) Date of publication of application:
**14.09.2016 Bulletin 2016/37**

(73) Proprietor: **Philips Lighting Holding B.V.**
**5656 AE Eindhoven (NL)**

(72) Inventors:
• **VERBEEK, Petrus, Antonius**
**5656 AE Eindhoven (NL)**
• **DELNOIJ, Roger Peter Anna**
**5656 AE Eindhoven (NL)**
• **HENSING, Johannes, Martinus, Maria**
**5656 AE Eindhoven (NL)**
• **KLEIN SWORMINK, Michel, Albertus ,Theodorus**
**5656 AE Eindhoven (NL)**
• **KLOMPENHOUWER, Michiel, Adriaanszoon**
**5656 AE Eindhoven (NL)**
• **SZCZERBA, Marek, Zbigniew**
**5656 AE Eindhoven (NL)**

(74) Representative: **Verweij, Petronella Daniëlle et al**
**Philips Lighting B.V.**
**Philips Lighting Intellectual Property**
**High Tech Campus 45**
**5656 AE Eindhoven (NL)**

(56) References cited:
**EP-A2- 0 198 551    GB-A- 2 201 770**
**JP-A- S 631 938    JP-A- H02 272 330**
**US-A- 4 612 442**

## Description

Technical Field

The present disclosure relates to the suppression of noise in a sensor, in particular in a Passive Infra-Red (PIR) sensor.

Background

In current lighting applications, energy efficiency is a more and more important subject. One possible way to reduce the energy consumption of a lighting system is to switch off or dim one or more light sources thereof when no persons or objects are present in a space, and conversely to switch on the light(s) when a person or an object is present in the space. In order to do this, the presence of a person or object in the relevant space has to be detected. Different types of presence sensors are currently in use.

There is a strong need for sensor-driven light control systems, because of their advantage of bringing down the energy consumption of the light source(s) thereof, and thereby improving cost-savings, and lifetime of the light source(s).

Nowadays it is very common to use PIR sensors for lighting controls. The density of PIR sensors is growing from a single sensor in a room towards having a sensor in each luminaire that is arranged to emit light into the room. Thus, the amount of PIR sensors present in a building is increasing. With the use of so many PIR sensors, the false positive rate is growing. A false positive is a sensor output which triggers light source(s) of the luminaire to turn on when no occupant is present in the room.

False triggers of PIR-sensors will switch on lighting and/or other equipment consuming energy, which is both expensive and detrimental to the environment.

One of the causes of a false positive is noise of the PIR sensor that is often referred to as "popcorn noise".

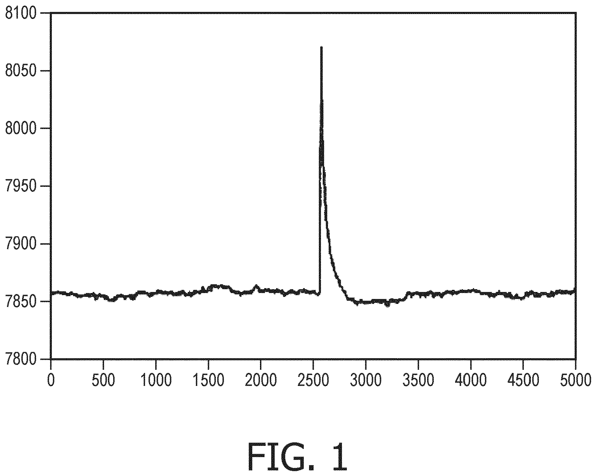

The phenomenon of popcorn noise is still not completely understood. A PIR sensor can build up some static energy inside the structure of the component. This charge can either be build up in the electronics of the system, or due to lattice irregularities in the ceramic pyroelectric material. If the device remains static this energy can be suddenly discharged resulting in a spike in the output signal of the PIR sensor. This is illustrated in Figure 1 (whereby the y-axis represents ADC steps and the x-axis represents ADC samples with a sample time of 13ms). This sporadic intrinsic noise is what we refer to herein as "popcorn noise".

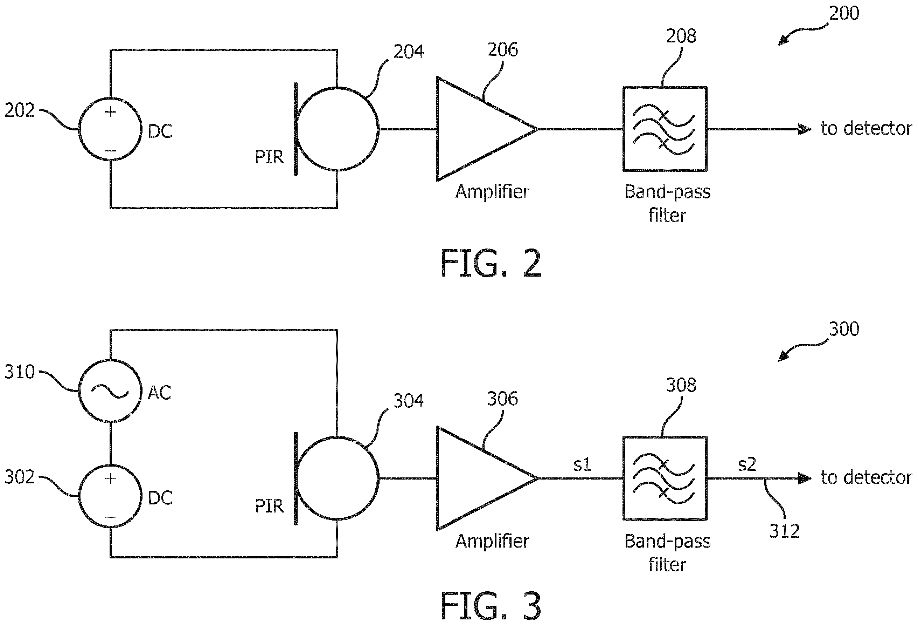

Known approaches attempt to filter out this popcorn noise. Figure 2 illustrates a prior art passive infrared sensor system 200 whereby a direct current (DC) voltage source 202 supplies a DC voltage to a PIR sensor 204.

The output of a PIR sensor 204 is typically in the order of millivolts and is therefore supplied to an amplifier 206 before being filtered by a filter 208. The filter 208 is typically a band-pass filter and has frequency characteristics based on attempting to filter out the popcorn noise. The filter 208 filters out the DC content and the noise present at frequencies above for example 4 Hz.

The document US4612442 discloses the removal of popcorn noise at the output of a passive infrared detector by a pulse width discriminator.

Summary

The inventors of the present disclosure have identified that due to the phenomenon of popcorn noise not being well understood, and that the shape of the popcorn noise can differ slightly, filtering of the popcorn noise is particularly difficult and thus popcorn noise often remains. This attempted filtering is particularly problematic given that the PIR sensor output signal observed from "normal" operation (detection when an occupant is present in a room) is alike the noise that needs to be filtered out.

The inventors have identified that popcorn noise can be suppressed by avoiding the scenario whereby the PIR sensor is in a complete static state where sporadic noise can occur.

According to one aspect of the present disclosure there is provided a passive infrared sensor system comprising: a direct current (DC) voltage source supplying a DC voltage; a passive infrared sensor supplied with the DC voltage, the passive infrared sensor comprising at least one sensor element; an alternating current (AC) voltage source supplying an AC voltage, the AC voltage source arranged to induce an alternating current to flow through said at least one sensor element; an amplifier arranged to amplify an output signal that is output from the passive infrared sensor to generate an amplified output signal; and a filter arranged to filter the amplified output signal to provide an output of the passive infrared sensor system, wherein the filter is configured to filter a frequency of the AC voltage.

In one embodiment, the DC voltage source and AC voltage source are connected in series such that the passive infrared sensor is additionally supplied with the AC voltage.

In other embodiments, the AC voltage source supplies the AC voltage to a heating element connected to the AC voltage source to vary a temperature of the heating element to induce said alternating current.

The passive infrared sensor may comprise said heating element. Alternatively, the heating element may be external to the passive infrared sensor.

The heating element may be a resistor. The filter may be a band-pass filter.

The at least one sensor element may be made of a pyroelectric material.

The passive infrared sensor may comprise two sensing elements connected in series with opposite polarization. Alternatively, the passive infrared sensor may comprise a first pair of sensing elements connected in series with opposite polarization, and a second pair of sensing elements connected in series with opposite polarization, wherein the first pair of sensing elements is connected in series oppositely polarized with the second pair of sensing elements.

According to another aspect of the present disclosure there is provided a luminaire comprising: a passive infrared sensor system according to any of the embodiments described herein; a detector arranged to receive the output of the passive infrared sensor system; and at least one light source connected to the detector; wherein the detector is configured to detect motion in a sensing region of the at least one sensor element based on the output of the passive infrared sensor system and control the at least one light source based on the detected motion.

These and other aspects will be apparent from the embodiments described in the following. The scope of the present disclosure is not intended to be limited by this summary nor to implementations that necessarily solve any or all of the disadvantages noted.

Brief Description of the Drawings

For a better understanding of the present disclosure and to show how embodiments may be put into effect, reference is made to the accompanying drawings in which:

> Figure 1 illustrates popcorn noise;
> Figure 2 illustrates a prior art passive infrared sensor system;
> Figure 3 illustrates a passive infrared sensor system in accordance with a first embodiment of the present disclosure;
> Figure 4a illustrates a passive infrared sensor system in accordance with a second embodiment of the present disclosure;
> Figure 4b illustrates a passive infrared sensor system in accordance with a third embodiment of the present disclosure;
> Figure 5 illustrates waveforms observed in embodiments of the present disclosure; and
> Figure 6 is a schematic block diagram of a luminaire.

Detailed Description

In embodiments described below, the scenario whereby a PIR sensor is in a complete static state where sporadic noise can occur is avoided. This is achieved by inducing an AC current flow through sensor element(s) of the PIR sensor.

A first embodiment of the present disclosure is described with reference to Figure 3. Figure 3 illustrates a passive infrared sensor system 300.

The passive infrared sensor system 300 comprises a DC voltage source 302 that supplies a DC voltage (V) to a PIR sensor 304. The DC voltage source 302 is connected in series with an AC voltage source 310 that supplies an AC voltage to a PIR sensor 304.

Due to the DC voltage source 302 being in connected in series with the AC voltage source 310, the PIR sensor 304 is powered by the DC voltage (V) superimposed with the AC voltage.

The AC voltage supplied by the AC voltage source 310 may take the form of a sine wave characterised by $ASin(\omega t)$ whereby A is the amplitude and $\omega=2\pi f$ whereby f is the frequency. In this example, the PIR sensor 304 is powered by a combined supply voltage which corresponds to $V + (ASin(\omega t))$. The AC voltage supplied by the AC voltage source 302 may take other forms other than a sine wave provided that the voltage changes continuously and without any steps, for example a the AC voltage supplied by the AC voltage source 302 may take the form of a triangle wave.

The PIR sensor 304 comprises at least one pyroelectric sensing element which each generates a temporary voltage when it is heated or cooled, and a Fresnel lens (or other optical means) for focusing infrared (IR) radiation from a certain area (the sensing region of the PIR sensor 304) on the two pyroelectric element sensing elements. The at least one pyroelectric sensing element is made of a pyroelectric material (e.g. a pyroelectric ceramic material). As is well understood in the art, a pyroelectric material generates an electric charge in response to a thermal energy flow through its body. Since all pyroelectric materials are also piezo-electric, heat absorbed by a pyroelectric sensing element causes the pyroelectric sensing element to expand, and the resulting thermally induced stress leads to the development of a piezoelectric charge on the element's electrodes which is manifested as a voltage across the electrodes.

The output voltage of the PIR sensor 304 is a function of the amount of IR Radiation sensed by the pyroelectric sensing element(s). As the output is also affected by vibration, radio interference, and sunlight. The PIR sensor 304 may have two sensing elements (a dual PIR sensor) connected in series with opposite polarization to cancel out the effects of vibration, temperature changes and sunlight. By having two sensing elements, a body passing in the sensing region (often referred to as a "field of view") of the PIR sensor 304 will activate the first sensing element and then the other sensing element (IR radiation to be detected will only be absorbed by only one sensing element at a time thus avoiding a cancellation). Thus the output current of the two sensing elements will change from zero, to positive, then to zero, to negative, and return to zero. Other sources of IR radiation will affect both sensing elements simultaneously and be cancelled. A PIR sensor having four sensing elements (a quad PIR sensor) works on the same principle to cancel other sources of IR radiation referred to above. That is, the PIR sensor 304 may have four sensing elements connected in series, whereby a first pair of sensing elements (connected in series with opposite polarization) is connected in series oppositely polarized with a second pair of sensing elements (connected in series with opposite polarization).

The output of the PIR sensor 304 is typically in the order of millivolts and is therefore supplied to an amplifier 306. The amplifier 306 is arranged to receive the output signal of the PIR sensor 304 and generate an amplified output signal (s1). A filter 308 receives the amplified output signal and performs filtering to provide an output (s2) of the passive infrared sensor system 300 on output line 312. The filter 308 shown in Figure 3 is a band-pass filter.

The AC component of the combined supply voltage causes a mechanical movement of the ceramic material of the pyroelectric sensing element(s) of the PIR sensor 304. This mechanical movement induces an alternating current to flow through the pyroelectric sensing element(s). Thus the pyroelectric sensing element(s) are continuously electrically charged and discharged with a very small amount of energy. This technique is referred to herein as "wobbling". Due to the fact that the energy in the pyroelectric sensing element(s) continuously changes, the probability of building up static energy in the pyroelectric sensing element(s) and thus popcorn noise occurring is significantly reduced.

The AC component of the combined supply voltage supplied by the AC voltage source 302 has an amplitude and frequency in the order that it will be filtered out by the filter 308. That is, the filter 308 is configured to attenuate the frequency of the AC component of the combined supply voltage.

The high-pass filter component of the band-pass filter 308 is used to filter off the DC offset of the pyroelectric sensing element(s) and the low-pass filter component of the band-pass filter 308 is used to suppress the noise at higher frequencies. The passband of the band-pass filter 308 is the frequency range where the real detections are in (i.e. when an occupant is present in a room). The "wobble" frequency (the frequency of the AC voltage) is selected such that it does not disturb the normal detection of the PIR sensor 304 and is present in the lower or higher frequency range of the band-pass filter 308 so that it will be filtered out by the band-pass filter 308.

Whilst in the above described embodiment, the electrical charging and discharging of the pyroelectric sensing element(s) is achieved by applying a voltage with an AC voltage component to the PIR sensor 304. The inventors have identified that this can also be achieved by varying the temperature of a heating element (e.g. a resistor) by connecting the heating element to the AC voltage source 310.

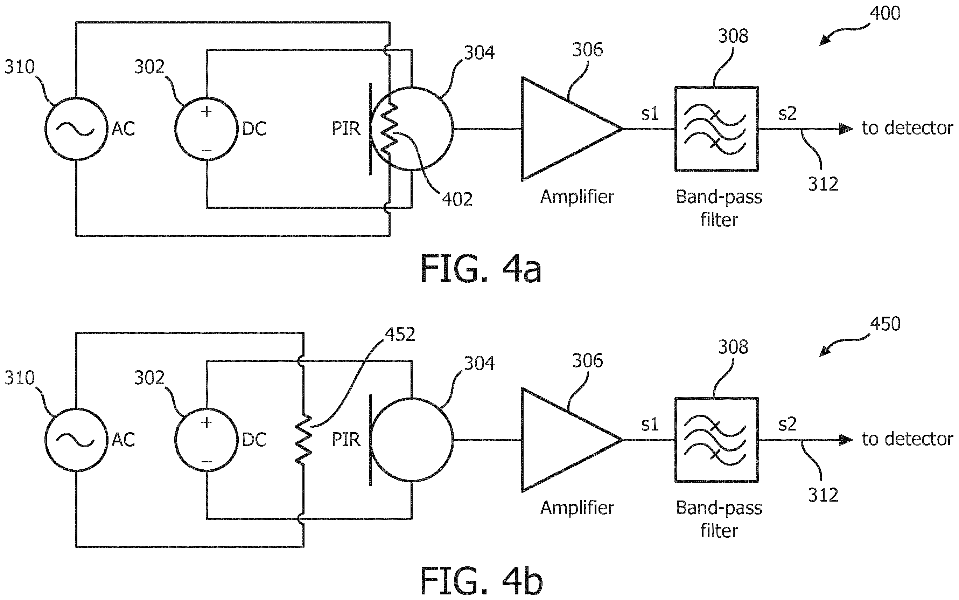

A second embodiment of the present disclosure is described with reference to Figure 4a. Figure 4a illustrates a passive infrared sensor system 400.

In the passive infrared sensor system 400, the DC voltage source 302 supplies a DC voltage (V) to the PIR sensor 304. In this embodiment, the AC voltage source 310 is not connected in series with the DC voltage source 302. The components connected to the output of the PIR sensor 304 in the passive infrared sensor system 400 are the same as those described above with reference to the passive infrared sensor system 300 shown in Figure 3, and therefore a description of these is not repeated.

As is well understood in the art, a PIR sensor 304 typically comprises a resistor 402 across the pyroelectric sensing element(s) and a transistor to buffer the extremely high impedance of the pyroelectric sensing element(s).

In this embodiment the internal resistor 402 of the PIR sensor 304 corresponds to the heating element described above. In particular, as shown in Figure 4a, the AC voltage source 310 supplies an AC voltage across the internal resistor 402 of the PIR sensor 304. By applying the AC voltage generated by the AC voltage source 310 to the internal resistor 402, the temperature of the internal resistor 402 is varied with a delta temperature and frequency. Due to the internal resistor 402 being physically positioned close to the pyroelectric sensing element(s) of the PIR sensor 304, the temperature variation of the internal resistor 402 causes electrical charging and discharging of the pyroelectric sensing element(s), and thus reduces the probability of popcorn noise occurring.

In this embodiment, the AC voltage generated by the AC voltage source 310 has an amplitude and frequency in the order that it will be filtered out by the filter 308. That is, the filter 308 is configured to attenuate the frequency of the AC voltage generated by the AC voltage source 310.

A third embodiment of the present disclosure is described with reference to Figure 4b. Figure 4b illustrates a passive infrared sensor system 450.

In the passive infrared sensor system 450, the DC voltage source 302 supplies a DC voltage (V) to the PIR sensor 304. In this embodiment, the AC voltage source 310 is not connected in series with the DC voltage source 302. The components connected to the output of the PIR sensor 304 in the passive infrared sensor system 450 are the same as those described above with reference to the passive infrared sensor system 300 shown in Figure 3, and therefore a description of these is not repeated.

In this embodiment, a resistor 452 external to the PIR sensor 304 corresponds to the heating element described above. In particular, as shown in Figure 4b, the AC voltage source 310 supplies an AC voltage across the external resistor 452. By applying the AC voltage generated by the AC voltage source 310 to the external resistor 452, the temperature of the external resistor 452 is varied with a delta temperature and frequency. Provided that the external resistor 452 is physically positioned close to the pyroelectric sensing element(s) of the PIR sensor 304, the temperature variation of the external resistor 452 causes electrical charging and discharging of the pyroelectric sensing element(s), and thus reduces the probability of popcorn noise occurring. This can be achieved by mounting the external resistor 452 at a position on a Printed Circuit Board (PCB) such that it is sufficiently close enough to the PIR sensor 304 such that temperature variation of the external resistor 452 has the effects described above.

In this embodiment, the AC voltage generated by the AC voltage source 310 has an amplitude and frequency in the order that it will be filtered out by the filter 308. That is, the filter 308 is configured to attenuate the frequency of the AC voltage generated by the AC voltage source 310.

Whilst the heating element in the passive infrared sensor system 450 has been described with reference to a resistor 452, this embodiment is not limited to such a heating element and other types of heating element well known to persons skilled in the art may be used e.g. a heat foil.

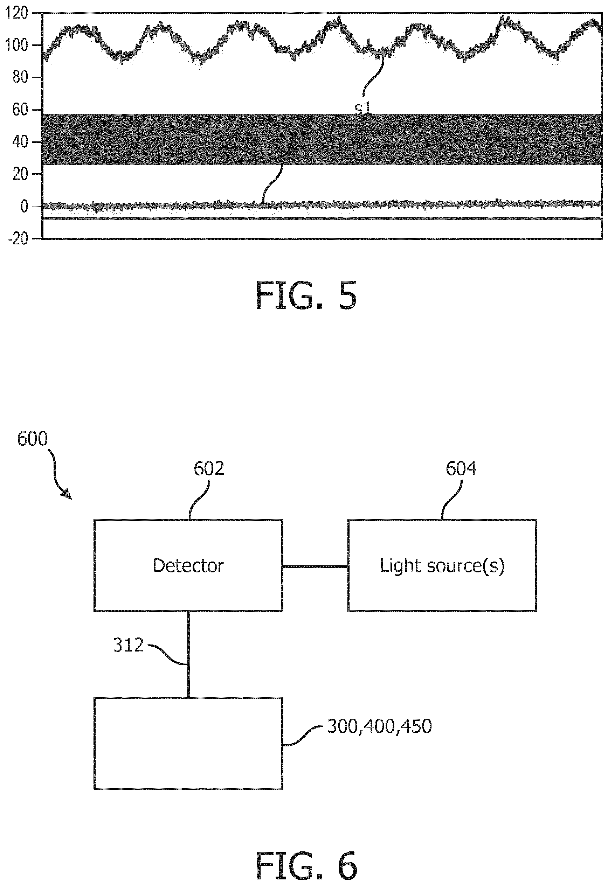

Reference is now made to Figure 5 which illustrates an example of the signals s1 (output of the amplifier 306) and s2 (output of the filter 308) for a sinusoidal AC voltage source 310. As shown in Figure 5, the sine wave injected by the AC voltage source 310 is filtered out by the filter 308.

The inventors have conducted tests on the various passive infrared sensor systems described herein, with and without the wobbling to provide evidence of the effectiveness of this technique. The results of these tests show that the 95% confidence MTBF (Mean Time Between Failures) has been improved with about a factor of 3.

The "95% confidence MTBF" values refers to a lower one-sided confidence bound MTBF which can be calculated according to the equation below:

$$MTBF = \left( \frac{2T}{\chi^2(\alpha, 2r+2)} \right)$$

Wherein:

*MTBF* = Mean Time Between False positives

*T* = total test time (hours)

*r* = total number of false positives

$\alpha$ = acceptable risk of error

*1-$\alpha$* = confidence level (with a confidence level of 95%, $\alpha$ = 1-0.95=0.05)

$\chi$ = inverse of the right-tailed probability of the chi-squared distribution

From these test results it is clear that the wobbling has a positive effect on the amount of false positives due to popcorn noise.

Reference is now made to Figure 6 which illustrates a schematic block diagram of a luminaire 600.

The luminaire 600 comprises any one of the passive infrared sensor systems 300, 400, 450 described above, a detector 602 and at least one light source 604.

The output line 312 of the passive infrared sensor system 300, 400, 450 is supplied to the detector 602. The detector 602 is configured to detect motion in a sensing region of the PIR sensor 304 based on the output of the passive infrared sensor system received on line 312 and control the at least one light source based on the detected motion. In particular, the detector 602 controls the amount of light emitted from the light source(s) by transmitting appropriate control signals to the light source(s). For example, when the detector 602 detects no motion in the sensing region of the PIR sensor 304, the detector 602 may control the light source(s) such that no light is emitted from the light source(s), and when motion is detected in the sensing region of the PIR sensor 304, the detector 602 may control the light source(s) such light is emitted from the light source(s) for a predetermined period of time.

The functionality of the detector 602 may be implemented in code (software) stored on a memory comprising one or more storage media, and arranged for execution on a processor comprising on or more processing units. The code is configured so as when fetched from the memory and executed on the processor to operate as described above. Alternatively it is not excluded that some or all of the functionality of the detector 602 is implemented in dedicated hardware circuitry (examples of which are well known in the art and are therefore not described in detail herein), or configurable hardware circuitry like an FPGA.

The at least one light source may comprise any suitable source of light such as e.g. a high/low pressure gas discharge source, a laser diode, an inorganic/organic light emitting diode (LED), an incandescent source, or a halogen source. A light source may be a single light source, or could comprise multiple light sources, e.g. multiple LEDs which may, for example, form an array of light sources collectively operating as a single light source.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A passive infrared sensor system (300, 400, 450) comprising:

   a direct current (DC) voltage source (302) supplying a DC voltage;
   a passive infrared sensor (304) supplied with the DC voltage, the passive infrared sensor comprising at least one sensor element;
   an alternating current (AC) voltage source (310) supplying an AC voltage, the AC voltage source arranged to induce an alternating current to flow through said at least one sensor element;
   an amplifier (306) arranged to amplify an output signal that is output from the passive infrared sensor to generate an amplified output signal; and
   a filter (308) arranged to filter the amplified output signal to provide an output (312) of the passive infrared sensor system, wherein the filter is configured to filter a frequency of the AC voltage.

2. A passive infrared sensor system of claim 1, wherein the DC voltage source and AC voltage source are connected in series such that the passive infrared sensor is additionally supplied with the AC voltage.

3. A passive infrared sensor system of claim 1, wherein the AC voltage source supplies the AC voltage to a heating element (402,452) connected to the AC voltage source to vary a temperature of the heating element to induce said alternating current.

4. A passive infrared sensor system of claim 3, wherein the passive infrared sensor comprises said heating element (402).

5. A passive infrared sensor system of claim 3, wherein the heating element (452) is external to the passive infrared sensor.

6. A passive infrared sensor system of any of claims 3 to 5, wherein the heating element is a resistor.

7. A passive infrared sensor system of any preceding claim, wherein the filter is a band-pass filter.

8. A passive infrared sensor system of any preceding claim, wherein said at least one sensor element is made of a pyroelectric material.

9. A passive infrared sensor system of any preceding claim, wherein the passive infrared sensor comprises two sensing elements connected in series with opposite polarization.

10. A passive infrared sensor system of any preceding claim, wherein the passive infrared sensor comprises a first pair of sensing elements connected in series with opposite polarization, and a second pair of sensing elements connected in series with opposite polarization, wherein the first pair of sensing elements is connected in series oppositely polarized with the second pair of sensing elements.

11. A luminaire (600) comprising:

    a passive infrared sensor system (300, 400, 450) according to any preceding claim;
    a detector (602) arranged to receive the output of the passive infrared sensor system; and
    at least one light source (604) connected to the detector;
    wherein the detector is configured to detect motion in a sensing region of the at least one sensor element based on the output of the passive infrared sensor system and control the at least one light source based on the detected motion.

**Patentansprüche**

1. Passives Infrarotsensorsystem (300, 400, 450), umfassend:

   eine Gleichstrom- (DC-) Spannungsquelle (302), die eine DC-Spannung bereitstellt;
   einen passiven Infrarotsensor (304), dem die DC-Spannung zugeführt wird, wobei der passive Infrarotsensor mindestens ein Sensorelement umfasst;
   eine Wechselstrom- (AC-) Spannungsquelle (310), die eine AC-Spannung bereitstellt, wobei die AC-Spannungsquelle so eingerichtet ist, dass sie einen Wechselstrom zum Durchfluss durch das mindestens eine Sensorelement induziert;
   einen Verstärker (306), der so eingerichtet ist, dass er ein Ausgangssignal verstärkt, das von dem passiven Infrarotsensor ausgegeben wird, um ein verstärktes Ausgangssignal zu erzeugen; sowie
   ein Filter (308), das so eingerichtet ist, dass es das verstärkte Ausgangssignal filtert, um eine Ausgabe (312) des passiven Infrarotsensorsystems vorzusehen, wobei das Filter so konfiguriert ist, dass es eine Frequenz der AC-Spannung filtert.

**2.** Passives Infrarotsensorsystem nach Anspruch 1, wobei die DC-Spannungsquelle und AC-Spannungsquelle so in Reihe geschaltet sind, dass dem passiven Infrarotsensor die AC-Spannung zusätzlich zugeführt wird.

**3.** Passives Infrarotsensorsystem nach Anspruch 1, wobei die AC-Spannungsquelle einem Heizelement (402,452) die AC-Spannung zuführt, das mit der AC-Spannungsquelle verbunden ist, um eine Temperatur des Heizelements zur Induzierung des Wechselstroms zu variieren.

**4.** Passives Infrarotsensorsystem nach Anspruch 3, wobei der passive Infrarotsensor das Heizelement (402) umfasst.

**5.** Passives Infrarotsensorsystem nach Anspruch 3, wobei sich das Heizelement (452) außerhalb des passiven Infrarotsensors befindet.

**6.** Passives Infrarotsensorsystem nach einem der Ansprüche 3 bis 5, wobei das Heizelement ein Widerstand ist.

**7.** Passives Infrarotsensorsystem nach einem der vorangegangenen Ansprüche, wobei das Filter ein Bandpassfilter ist.

**8.** Passives Infrarotsensorsystem nach einem der vorangegangenen Ansprüche, wobei das mindestens eine Sensorelement aus einem pyroelektrischen Material besteht.

**9.** Passives Infrarotsensorsystem nach einem der vorangegangenen Ansprüche, wobei der passive Infrarotsensor zwei mit entgegengesetzter Polung in Reihe geschaltete Sensorelemente umfasst.

**10.** Passives Infrarotsensorsystem nach einem der vorangegangenen Ansprüche, wobei der passive Infrarotsensor ein mit entgegengesetzter Polung in Reihe geschaltetes, erstes Paar Sensorelemente sowie ein mit entgegengesetzter Polung in Reihe geschaltetes, zweites Paar Sensorelemente umfasst, wobei das erste Paar Sensorelemente mit dem zweiten Paar Sensorelemente entgegengesetzt polarisiert in Reihe geschaltet ist.

**11.** Leuchte (600), umfassend:

ein passives Infrarotsensorsystem (300, 400, 450) nach einem der vorangegangenen Ansprüche;
einen Detektor (602), der so eingerichtet ist, dass er die Ausgabe des passiven Infrarotsensorsystems empfängt; sowie
mindestens eine Lichtquelle (604), die mit dem Detektor verbunden ist;
wobei der Detektor so konfiguriert ist, dass er aufgrund der Ausgabe des passiven Infrarotsensorsystems eine Bewegung in einem Erfassungsbereich des mindestens einen Sensorelements detektiert und die mindestens eine Lichtquelle auf der Basis der detektierten Bewegung steuert.

**Revendications**

**1.** Système de capteur infrarouge passif (300, 400, 450) comprenant :

une source de tension continue (CC) (302) fournissant une tension continue ;
un capteur infrarouge passif (304) alimenté par la tension continue, le capteur infrarouge passif comprenant au moins un élément de capteur ;
une source de tension alternative (CA) (310) fournissant une tension alternative, la source de tension alternative étant agencée pour provoquer la circulation d'un courant alternatif à travers ledit au moins un élément de capteur ;
un amplificateur (306) agencé pour amplifier un signal de sortie qui est délivré en sortie par le capteur infrarouge passif afin de générer un signal de sortie amplifié ; et
un filtre (308) agencé pour filtrer le signal de sortie amplifié afin de fournir une sortie (312) du système de capteur infrarouge passif, dans lequel le filtre est configuré pour filtrer une fréquence de la tension alternative.

**2.** Système de capteur infrarouge passif selon la revendication 1, dans lequel la source de tension continue et la source de tension alternative sont connectées en série, de sorte que le capteur infrarouge passif soit alimenté additionnellement par la tension alternative.

**3.** Système de capteur infrarouge passif selon la revendication 1, dans lequel la source de tension alternative fournit la tension alternative à un élément chauffant (402, 452) connecté à la source de tension alternative pour faire varier une température de l'élément chauffant afin de provoquer ledit courant alternatif.

**4.** Système de capteur infrarouge passif selon la revendication 3, dans lequel le capteur infrarouge passif comprend ledit élément chauffant (402).

**5.** Système de capteur infrarouge passif selon la revendication 3, dans lequel l'élément chauffant (452) est externe au capteur infrarouge passif.

**6.** Système de capteur infrarouge passif selon l'une quelconque des revendications 3 à 5, dans lequel l'élément chauffant est une résistance.

**7.** Système de capteur infrarouge passif selon l'une quelconque des revendications précédentes, dans lequel le filtre est un filtre passe-bande.

**8.** Système de capteur infrarouge passif selon l'une quelconque des revendications précédentes, dans lequel ledit au moins un élément de capteur est constitué d'un matériau pyroélectrique.

**9.** Système de capteur infrarouge passif selon l'une quelconque des revendications précédentes, dans lequel le capteur infrarouge passif comprend deux éléments de détection connectés en série et de polarisation opposée.

**10.** Système de capteur infrarouge passif selon l'une quelconque des revendications précédentes, dans lequel le capteur infrarouge passif comprend une première paire d'éléments de détection connectés en série et de polarisation opposée, et une seconde paire d'éléments de détection connectés en série et de polarisation opposée, dans lequel la première paire d'éléments de capteur est connectée en série selon une polarisation opposée avec la seconde paire d'éléments de détection.

**11.** Luminaire (600) comprenant :

un système de capteur infrarouge passif (300, 400, 450) selon l'une quelconque des revendications précédentes ;
un détecteur (602) agencé pour recevoir la sortie du système de capteur infrarouge passif ; et
au moins une source de lumière (604) connectée au détecteur ;
dans lequel le détecteur est configuré pour détecter un mouvement dans une région de détection de l'au moins un élément de capteur sur la base de la sortie du système de capteur infrarouge passif et pour commander l'au moins une source de lumière sur la base du mouvement détecté.

FIG. 1

FIG. 2

FIG. 3

EP 3 067 870 B1

FIG. 4a

FIG. 4b

FIG. 5

FIG. 6

**EP 3 067 870 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4612442 A